# EUROPÄISCHE PATENTANMELDUNG

(11) **EP 2 006 164 A2**
(43) Veröffentlichungstag der Anmeldung: **24.12.2008**
(21) Anmeldenummer: 08158249.6
(22) Anmeldetag: 13.06.2008
(51) Int. Cl.: B60R 21/13

(54) **Überrollschutzsystem für Kraftfahrzeuge mit zumindest einem pyrotechnisch aufstellbaren Überrollkörper**

(30) Priorität: 21.06.2007 DE 102007029097
(71) Anmelder: ISE Automotive GmbH, 51702 Bergneustadt (DE)
(72) Erfinder: Liesaus, Frank, 51702, Bergneustadt (DE)
(74) Vertreter: Fuchs

(57) **Zusammenfassung**

Die Erfindung geht aus von einem Überrollschutzsystem für Kraftfahrzeuge mit zumindest einem aktiv aufstellbaren Überrollkörper (2), der im betrieblichen Normalzustand in einer Ruhelage abgelegt ist und mittels eines pyrotechnischen Aktuators (6) in eine Stützposition aufstellbar ist.

Um ein Überrollschutzsystem bereit zu stellen bei dem der pyrotechnische Aktuator (6) platzsparend, hochwirksam und kostengünstig angeordnet ist, sieht die Erfindung u.a. vor, dass der Überrollkörper (2) durch den Aktuator (6) nach dem Prinzip des Raketenantriebs aufgestellt wird.

## Beschreibung

Die Erfindung bezieht sich auf ein Überrollschutzsystem für Kraftfahrzeuge gemäß dem Oberbegriff des Anspruchs 1.

Derartige Überrollschutzsysteme dienen zum Schutz der Insassen in Kraftfahrzeugen ohne schützendes Dach, typischerweise in Cabriolets oder Roadstern bei einem Überschlag, da das Fahrzeug über den aufgestellten Überrollkörper abrollen wird, der den Insassen einen Überlebensraum bietet.

Es ist dabei bekannt, einen die gesamte Fahrzeugbreite überspannenden, als Teil der Karosserie ausgebildeten Überrollbügel vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest im Fahrgastraum installierten, d.h. starren, U-förmigen Überrollbügel zuzuordnen. Diese Lösung wird typischerweise bei Roadstern zur Unterstreichung des sportlichen Aussehens eingesetzt.

Weit verbreitet bei Cabriolets sind konstruktive Lösungen, bei denen der Überrollkörper im Normalzustand eingefahren ist, und im Gefahrenfall, also bei einem drohenden Überschlag, sehr schnell in eine schützende Position aufgestellt wird, um zu verhindern, dass die Fahrzeuginsassen durch das sich überschlagende Fahrzeug erdrückt werden.

Diese sogenannten "aktiven" Überrollschutzsysteme weisen typischerweise einen in einem fahrzeugfesten Führungskörper geführten U-förmigen Überrollbügel oder einen aus einem Profilkörper gebildeten Überrollkörper auf, wobei der Führungskörper in einem Kassetten-Gehäuse, das Seitenteile und ein Bodenteil aufweist, befestigt ist. Dieser Überrollbügel bzw. Überrollkörper wird im Normalzustand gegen die Vorspannkraft mindestens einer Antriebs-Druckfeder durch eine Haltevorrichtung in einer Stellung, einer Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in verzahnenden Wirkeingriff tretende Verriegelungseinrichtung, die Wiedereinfahrsperre, ein Zurückdrücken des Überrollbügels verhindert. Dabei ist typischerweise jedem Fahrzeugsitz eine Kassette zugeordnet. Eine derartige Kassetten-Konstruktion eines aktiven Überrollschutzsystems mit einem U-förmigen Überrollbügel zeigt beispielsweise die DE 100 40 649 C1.

Des weiteren sind auch Überrollschutzsysteme mit einem annähernd die gesamte Fahrzeugbreite überspannenden, aktiv aufstellbaren Überrollbügel bekannt.

Sowohl die sitzbezogenen Kassetten-Konstruktionen als auch die annähernd die gesamte Fahrzeugbreite überspannenden Überrollbügel sind in vielfältigen Ausführungsformen, angepasst an den jeweiligen Fahrzeugtyp, auf dem Markt eingeführt und in Betrieb.
Es sind dabei auch Fahrzeuge bekannt, bei denen ein Überrollbügel aus einer horizontalen Ruhelage in eine vertikale Schutzposition hochschwenkbar ist.

Bei all diesen unterschiedlichen Ausgestaltungen des Überrollschutzes, die auch unter Verwendung der Erfindung gebildet werden können, ist es notwendig, eine im Gefahrenfall auslösbare Haltevorrichtung für den in einer Ruhelage fixierten Überrollkörper und einen Antrieb zum Aufstellen bzw. Verschwenken des jeweiligen Überrollkörpers nach dem Lösen der Haltevorrichtung vorzusehen.

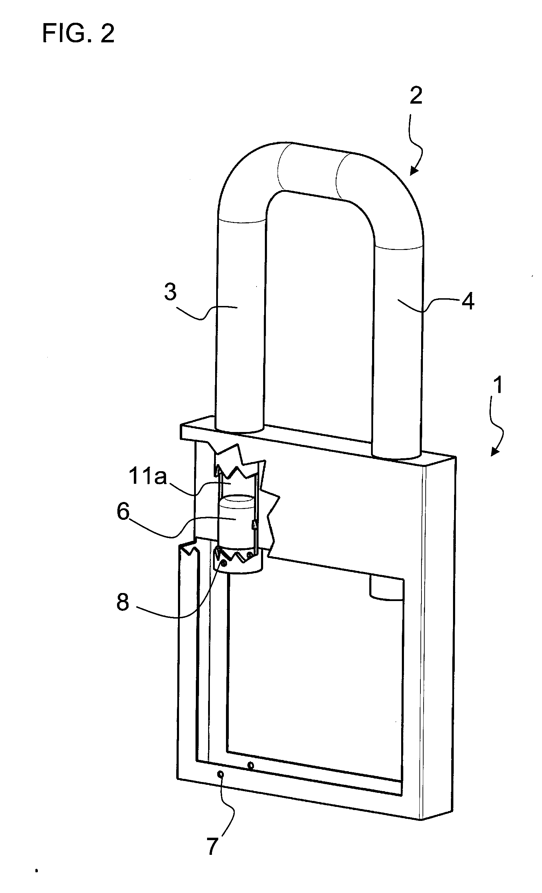

Typische auslösbare Haltevorrichtungen bestehen beispielsweise aus einem am Überrollkörper angebrachten Halteglied und einer Auslösemechanik, typischerweise einer Klinkenmechanik, an einem sensorgesteuerten Aktuator, der durch einen sogenannten elektrisch aktivierbaren Auslösemagneten oder alternativ durch ein pyrotechnisches Element entsprechend der DE 43 42 401 A1 gebildet werden kann. Ein derartiges pyrotechnisches Element weist typischerweise einen pyrotechnischen Treibsatz (Ladung) auf, welcher in einem Gehäuse einer Zylinder-Kolben-Einheit eingebaut ist, wobei durch den gezündeten pyrotechnischen Treibsatz eine kleine Kolbenstange (stifteinziehend oder stiftausstoßend) die Auslösemechanik betätigt und damit die Halterung des fixierten Überrollkörpers aufhebt. Fig. 2 zeigt ein Beispiel, auf welche Weise der obere Teil eines Überrollbügels direkt von einem Gasgenerator angetrieben werden kann. Dabei begrenzt der Kolben eine im wesentlich zylindrische Expansionskammer, an welcher ein Gasgenerator befestigt ist. Wird der pyrotechnische Zündsatz im fahrzeugfesten Gasgenerator durch eine elektrische Spannung gezündet, baut das entstehende Gas in der Expansionskammer einen pneumatischen Druck auf, welcher den Kolben verdrängt. Der Überrollbügel wird auf diese Weise ausgefahren. Ausser dem in Fig. 2 beschriebenen direkten Antrieb eines Überrollbügels ist auch indirekter Antrieb durch den vom Gasgenerator erzeugten Druck möglich, In jedem Fall ist der Gasgenerator fahrzeugfest angeordnet.

Durch die DE 199 06 912 C1 ist es bekannt, eine Antriebsanordnung zum kontinuierlichen langsamen Verfahren des Überrollkörpers mit der Kopfstütze zu bilden, die keinen Einfluss auf den Schnellantrieb für den Überschlagfall hat. Dazu ist auf einer verfahrbaren Traverse ein Aktuator befestigt, der ein elektromagnetischer oder ein pyrotechnischer Aktuator sein kann. Der Aktuator wird beim Betätigen der Kopfstützenverstellung, die Teil des Überrollkörpers ist, durch einen fahrzeugfest gelagerten Antrieb, über eine Antriebsspindel verstellt. Im Gefahrenfall, also beim Schnellantrieb, kommt es zu einer Trennung der Traverse mit dem darauf befindlichen Aktuator, so dass der Aktuator fahrzeugfest bleibt.

Die DE 954 021 B offenbart eine Vorrichtung zur selbsttätigen Regelung eines Rückstoßantriebes, vorzugsweise einer Rakete, wobei der Schub durch die Menge der Reaktionsstoffe gesteuert wird. Hierbei handelt es sich um einen bekannten Antrieb aus dem Gebiet der Luftfahrt.

Aus der DE 199 60 764 B4 ist es bekannt, für das Auslösen der Haltevorrichtung und das Ausstellen des beweglichen Elementes einen gemeinsamen karosseriefesten pyrotechnischen Gasgenerator vorzusehen. Dabei wird die Haltevorrichtung aus einem Verriegelungsdorn mit einem hinterschnittenen Flansch, der mit dem beweglichen Element in Verbindung steht und einem karosseriefest angebrachten Verriegelungskranz mit beweglichen Verriegelungshaken für einen lösbaren Wirkeingriff mit der Hinterschneidung am Verriegelungsdorn gebildet. Bei Auslösung des karosseriefesten Gasgenerators wird zunächst, wie oben beschrieben, die Halterung durch den Gasdruck gelöst und anschließend sorgt die separate teleskopartige Anordnung des am Einbaurahmen karosseriefesten Zylinderrohres mit der über ein Antriebsquerjoch an dem ausfahrbaren Überrollbügel befestigten Kolbenstange dafür, dass der Überrollbügel ausfahren kann. Das Druckgas strömt dabei über die Überströmbohrungen in den zwischen dem Antriebskolben und dem Haltering befindlichen Raum ein und beaufschlagt hier den Antriebskolben.

Mit steigender Anzahl an Bauteilen zur Herstellung der Haltevorrichtung steigt auch das Risiko für Fehlfunktionen. Diese resultieren u.a. aus einer Addition der unterschiedlichen Toleranzen. Ferner handelt es sich bei der gesamten Halte- und Aufstelleinheit um eine zusätzliche und somit teure Ausführungsform; aufgrund des Kostendrucks in der Automobilzulieferindustrie wird jedoch der Ruf nach kostengünstigen Systemen immer lauter.

Aufgabe der Erfindung ist es ein zuverlässiges und kostengünstiges Überrollschutzsystem bereitzustellen, das sich platzsparend in ein Fahrzeug integrieren lässt.

Die Erfindung löst die Aufgabe durch ein Überrollschutzsystem mit den Merkmalen des Anspruchs 1. Vorteilhafte Weiterbildungen der Erfindung sind in den Unteransprüchen angegeben.

Kennzeichnend für das erfindungsgemäße Überrollschutzsystem ist, dass der pyrotechnische Aktuator am aufstellbaren Teil des Überrollschutzsystems, dem Überrollkörper in einer Druckkammer des Überrollkörpers , befestigt ist, wobei der pyrotechnische Aktuator ein Gasgenerator ist. Im Rahmen der Erfindung handelt es sich bei dem Überrollkörper immer um den ausfahrbaren Teil des Überrollschutzsystems.

Das erfindungsgemäße Überrollschutzsystem ermöglicht eine sehr kompakte Bauweise des gesamten Überrollschutzsystems. Auf zusätzliche Bauteile wie Antriebskolben, Kolbenstange, Zylinderrohr, Aufstellfedern und dergleichen, die bei dem aus dem Stand der Technik bekannten Überrollschutzsystemen erforderlich sind, kann vollständig verzichtet werden. Somit zeichnet sich das erfindungsgemäße Überrollschutzsystem durch seinen kostengünstigen, unanfälligen, zuverlässigen und hochwirksamen Aufbau aus, der, wie oben beschrieben, insbesondere aus der geringen Anzahl erforderlicher Bauteile resultiert.

Der pyrotechnische Aktuator befindet sich in einer Art "Druckkammer" des Überrollkörpers. Die Druckkammer ist durch die vorgegebene Form des Überrollkörpers in nahezu allen Ausführungsfällen, der auf dem Markt eingeführten Überrollschutzsysteme, bereits vorhanden. Dies betrifft sowohl die U-förmigen Überrollkörper, welche aus Rohren gebildet werden, ebenso wie die in schalenbauweise, wie aus DE 10 2005 004 646 B3, zusammengesetzten Überrollkörper, als auch die kassettenförmigen Überrollkörper, die aus Profilkörpern gebildet sind.
Schon aus gewichts-, material- und kostentechnischen Gründen handelt es sich bei all diesen Varianten um Hohlkörper. Vorteilhafterweise nutzt die Erfindung die vorhandenen Hohlräume, ohne zusätzliche Bauteile zu benötigen.

Der Druckraum kann durch ein oberhalb des pyrotechnischen Aktuators gelegenes Schottelement gezielt verkleinert werden, um auch pyrotechnische Aktuatoren mit kleineren Ladungen einsetzen zu können. In diesem Fall ist der pyrotechnische Aktuator so im Druckraum eingebaut sein, dass genügend Platz um den pyrotechnischen Aktuator vorhanden ist, damit die Druckgase um den Aktuator herum entweichen können und so die entsprechende Schubkraft entsteht.

Mit Vorteil wird die Verbindung zwischen der impulsgebenden Sensoreinheit und dem pyrotechnischen Aktuator in der Grundstellung des Überrollkörpers durch Kontakte gebildet, so dass eine elektrische Zuleitung zu dem pyrotechnischen Aktuator bei der Aufstellbewegung nicht abgerissen wird.

Nach einer Weiterbildung der Erfindung kann der pyrotechnische Aktuator nach dessen Zündung ausgewechselt werden, ohne dass eine neue Verdrahtung des pyrotechnischen Aktuators erfolgen muss.
Die pyrotechnischen Aktuatoren oder Gasgeneratoren haben von Hause aus ein sehr hohes Energieaufkommen, so dass es ohne Probleme möglich ist, die verschiedenen Hohlräume mit ihren unterschiedlichen Voluminas mit Druckgas zu füllen.
Im Prinzip funktioniert die Aufstellung des Überrollkörpers wie ein "Raketenantrieb".

In einer Ausgestaltung wird durch den pyrotechnischen Aktuator nach dessen "Zündung" auch die Halterung des Überrollkörpers gelöst. Die Halterung kann dabei durch ein sich zerstörendes "Berstelement" gebildet werden. Bei dem Berstelement handelt es sich um ein Verbindungselement zwischen dem fahrzeugfestem Teil des Überrollschutzsystems und dem ausfahrbaren Teil des Überrollschutzsystems, dem Überrollkörper. So kann das Berstelement über eine definierte Sollbruchstelle verfügen, die bei Zündung des pyrotechnischen Aktuators zerstört wird. Durch die beschriebene Halterung über ein Berstelement wird der Überrollkörper in seiner eingefahrenen Stellung, der Ruhelage, gehalten, es kommt somit nicht zu Klappergeräuschen bei Fahrbahnunebenheiten und ein missbräuchliches Herausziehen des Überrollkörpers wird ebenfalls verhindert.

Anstelle eines Berstelementes kann die Halterung auch durch eine herkömmliche Klinkenanordnung gebildet sein. Der austretende Gasdruck öffnet dann zunächst die Klinke, bevor der restliche Gasdruck den Überrollkörper aufstellt. Vorteilhafterweise handelt es sich bei einer solchen Klinkenanordnung um eine Art "Wippe". Diese Wippe hat zwei Arme, wobei der eine Arm mit einer entsprechenden Ausformung dafür sorgt, dass der Überrollkörper gehalten ist, der andere Arm nimmt den Druck der Treibgase auf und löst somit die Halterung. Mit Vorteil hat dieser zweite Arm eine große Oberfläche, um die Druckgase entsprechend wirksam zu absorbieren. Der zweite Arm kann unmittelbar unterhalb der Druckkammer des Überrollkörpers sitzen und der erste Arm neben der Druckkammer, somit kommt der Druck der Treibgase mit Vorteil lediglich auf den zweiten Hebelarm.

Es können aber auch andere form- und/oder kraftschlüssige Verbindungen als Halterung vorgesehen sein, wie Verstemmung, Bördelung, Presspassung etc.. Auch durch den Druck der Treibgase lösbare stoffschlüssige Verbindungen sind denkbar.

Eine alternative Bauform sieht ein zusätzliches Druckkammerelement vor, welches zumindest teilweise innerhalb des Überrollkörpers liegt oder diesen zumindest teilweise umgeben kann. Das zusätzliche Druckkammerelement ist dann ortsfest an dem fahrzeugfesten Teil des Überrollschutzsystems befestigt. Mit Vorteil sind durch diese alternative Bauform kleinere pyrotechnische Ladungen einsetzbar.

Das Überollschutzsystem kann vielfältige Ausgestaltungsformen aufweisen, so kommt z.B. eine Rohrkonstruktion für den ausfahrbaren Teil des Überrollschutzsystems, also dem eigentlichen Überrollkörper, genauso in Betracht, wie ein Kassettensystem welches durch Profile gebildet wird.

Auch die verwendeten Materialien können sehr unterschiedlich sein. So können z.B. Stahl, Kunststoff, insbesondere faserverstärkter Kunststoff, Magnesium und Aluminium Verwendung finden. Hierbei ist selbstverständlich auch eine Kombination der unterschiedlichen Materialien denkbar.

Das erfindungsgemäße Überrollschutzsystem zeichnet sich u.a. durch seine kompakte Bauweise aus. Eine zusätzliche Platzersparnis kann nach einer Weiterbildung der Erfindung dadurch erreicht werden, dass die Bügelschenkel oder auch der Profilkörper des Überrollkörpers in unmittelbarer Nähe zum Boden des Überrollschutzsystem oder, falls aus platztechnischen Gründen auf diesen verzichtet wird, in unmittelbarer Nähe zur Wagenstruktur, die sich unterhalb des Überrollkörpers befindet, liegen. Somit geht kein wertvoller Bauraum verloren, der für den Aufstellhub genutzt werden kann und den Überlebensraum für die Insassen vergrößert. Der Aufstellhub ergibt sich aus der Differenz zwischen eingefahrenen Überrollkörper und ausgefahrenen Überrollkörper. Je weiter der Überrollkörper ausfahren kann, desto größer wird auch die Überrolltangente. Diese ergibt sich indem man eine Tangente über den dachseitigen Windschutzscheibenrahmen hin zu den ausgefahrenen Überrollkörpern legt. Je mehr Platz sich unterhalb dieser Tangente für die Insassen bildet, desto größer ist die Sicherheit für die Fahrzeuginsassen im Falle eines Überschlags. Die Weiterbildung verbessert den Schutz für die Fahrzeuginsassen in ergänzender Weise.

Der pyrotechnische Aktuator kann mit den unterschiedlichsten Befestigungsmethoden am Überrollkörper fixiert werden.
Möglich sind sowohl kraftschlüssige, formschlüssige als auch stoffschlüssige Verbindungen. Exemplarisch seien hier nur Verschraubungen, Vernietungen, Rastverbindungen und Verklebungen genannt.

In ergänzender Weise sorgt die platzsparende Unterbringung des pyrotechnischen Aktuators für Raum in der Peripherie, so dass Platz für Durchlademöglichkeiten oder andere Bauteile geschaffen wird.

Anhand von mehreren in den Zeichnungen in verschiedenen Ansichten und Zuständen dargestellten vorteilhaften Ausführungsbeispielen wird die Erfindung näher erläutert.

Es zeigen:
- Fig.1: ein Überrollschutzsystem in Ruhelage in einer schematisierten, teilweise weggebrochenen isometrischen Ansicht, das einen pyrotechnischen Aktuator im Überrollkörper aufweist,
- Fig.2: das System nach Fig. 1, jedoch im aufgestellten Zustand des Überrollkörpers,

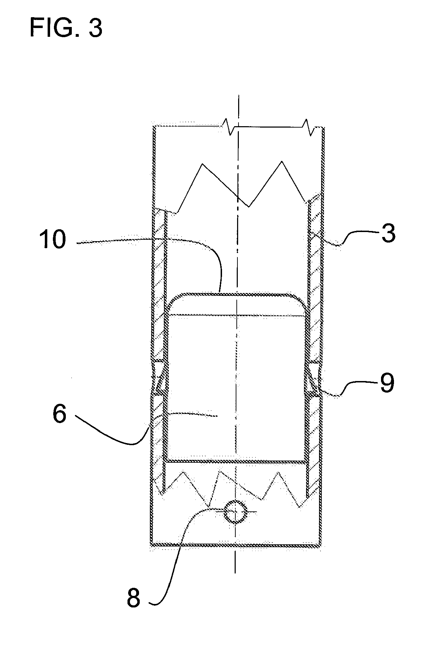

- Fig.3: ein Überrollschutzsystem in einem schematisierten Teilausschnitt nach Fig. 1 zur Verdeutlichung der erfindungsgemäßen Lage des pyrotechnischen Aktuators, und

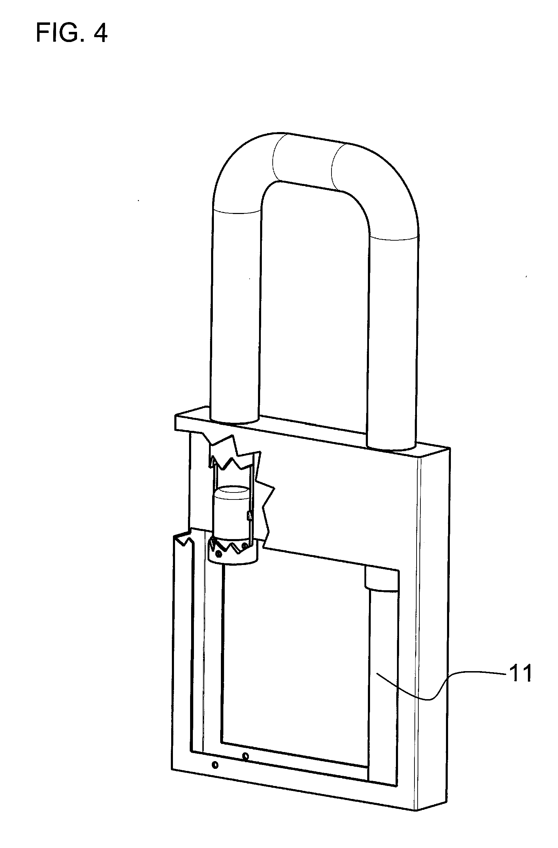

- Fig.4: eine Variante des Überrollschutzsystems nach Fig. 2, mit einem Druckkammerelement.

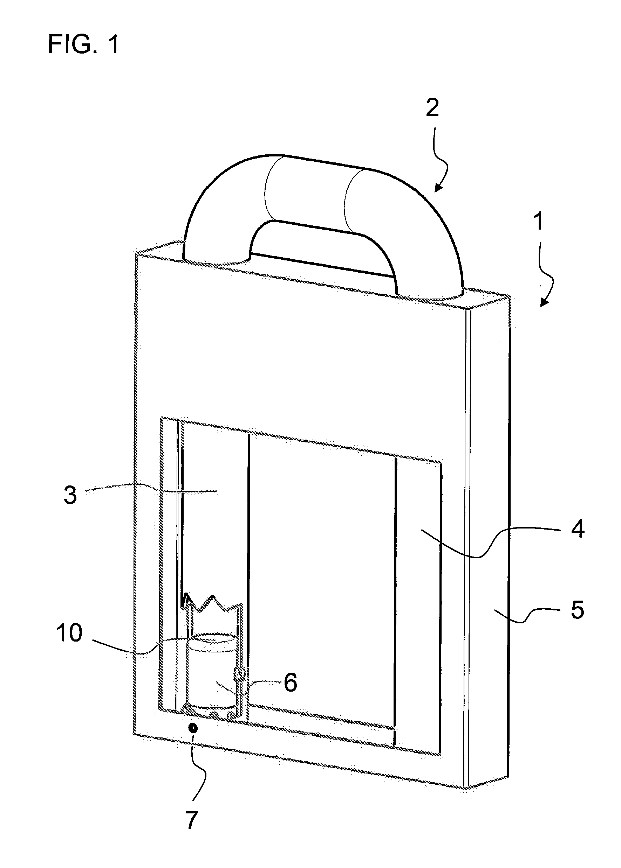

Ein in Fig.1 dargestelltes Überrollschutzsystem 1 weist einen Überrollkörper 2 auf, der im Wesentlichen aus zwei miteinander kopfseitig über eine Art Querjoch verbundenen Bügelschenkeln 3,4 gebildet ist und sich in einer Ruhelage befindet. In dem linken, zeichentechnisch weggebrochenem Bügelschenkel 3 ist die Anordnung eines pyrotechnischen Aktuators 6 zu sehen.
Angaben wie links, rechts oder oben und unten beziehen sich auf die zeichnerische Darstellung.

In der in Fig. 1 dargestellten Ruhelage des Überrollkörpers 2 befindet sich dieser in einem fahrzeugfest angeordneten kassettenartigen Gehäuse 5. Die Halterung wird durch ein nicht dargestelltes Berstelement gebildet, welches die Lage des Überrollkörpers 2 in der Ruhelage sichert und ein Herausziehen des Überrollkörpers 2 verhindert bzw. die Sicherung gegen ungewolltes klappern darstellt. Das Berstelement ist das Halteglied zwischen fahrzeugfestem Teil des Überrollschutzsystems 1 und dem ausfahrbaren Überrollkörper 2. Es befindet sich zum einen in sich gegenüberliegenden Löchern 7 einer unteren Traverse des Gehäuses 5 und zum anderen in sich gegenüberliegenden Löchern 8 des endseitigen linken Bügelschenkels 3.

Der pyrotechnische Aktuator 6 sitzt bei diesem Ausführungsbeispiel im unteren Ende des linken Bügelschenkels 3. Durch zwei Rastelemente 9, die Bestandteil des pyrotechnischen Aktuators 6 sind, wird dieser in der vorgegebenen Position im Überrollkörper 2, in diesem Fall dem linken Bügelschenkel 3, gehalten. Die Rastelemente 9 verrasten in Löchern des linken Bügelschenkels 3, die diesem zugeordnet sind. Wird der pyrotechnische Aktuator 6 gezündet, entweichen am oberen Ende des pyrotechnischen Generators 10 die Druckgase. Sie füllen den Überrollkörper 2 aus, d.h. sie werden durch den linken Bügelschenkel 3 über das Querjoch in den rechten Bügelschenkel 4 geleitet. Die Druckkraft ist so groß, dass zunächst das Berstelement an seiner Sollbruchstelle zerstört wird. Die übrigen Druckgase sorgen dafür, dass der Überrollkörper wie eine "Rakete" aufgestellt wird. In der ausgefahrenen Stellung verriegelt der Überrollkörper 2.

Die für die Funktion des aktiven Überrollschutzsystems 1 erforderlichen Bauteile wie die Führung und die Verriegelungseinheit für den aufgestellten Überrollkörper 2 sind nicht dargestellt, jedoch aus einschlägigen Schutzrechtsschriften, insbesondere der Anmelderin, hinlänglich bekannt.

In einer hier nicht dargestellten Ausführungsform besitzt das Berstelement neben einer Sollbruchstelle einerends einen Kopf und wird im Bereich des anderen Endes durch ein Sicherungsmittel, wie einer Sicherungsscheibe, in der Lage fixiert. Somit besitzt das Berstelement eine für alle Betriebszustände sichere Lage.

### Bezugszeichenliste

- 1: Überrollschutzsystem
- 2: Überrollkörper
- 3: Linker Bügelschenkel
- 4: Rechter Bügelschenkel
- 5: Kassettenartiges Gehäuse
- 6: Pyrotechnischer Aktuator
- 7: Loch im Gehäuse
- 8: Loch im Bügelschenkel
- 9: Rastelement
- 10: Oberes Ende des pyrotechnischen Aktuators
- 11: Druckkammerelement

## Patentansprüche

1. Überrollschutzsystem für Kraftfahrzeuge, mit zumindest einem aktiv aufstellbaren Überrollkörper (2), der im betrieblichen Normalzustand in einer Ruhelage abgelegt ist und mittels eines pyrotechnischen Aktuators (6) in eine Stützposition aufstellbar ist, **dadurch gekennzeichnet, dass** der pyrotechnische Aktuator (6) am aufstellbaren Überrollkörper (2) in einer Druckkammer (11a) des Überrollkörpers (2) befestigt ist wobei der pyrotechnische Aktuator (6) ein Gasgenerator ist.

2. Überrollschutzsystem nach Anspruch 1, **dadurch gekennzeichnet, dass** der pyrotechnische Aktuator (6) in einem Bügelschenkel (3,4) des Überrollkörpers (2) befestigt ist.

3. Überrollschutzsystem nach einem der Ansprüche 1 oder 2, **dadurch gekennzeichnet, dass** der pyrotechnische Aktuator (6) so angeordnet ist, dass um ihn herum Freiraum gebildet wird zur Umströmung der Druckgase.

4. Überrollschutzsystem nach einem der vorgenannten Ansprüche, **dadurch gekennzeichnet, dass** der pyrotechnische Aktuator (6) in der Ruhelage des Überrollkörpers (2) über Kontakte mit einer impulsgebenden Sensoreinheit in Verbindung steht.

5. Überrollschutzsystem nach einem der vorgenannten Ansprüche, **dadurch gekennzeichnet, dass** der pyrotechnische Aktuator (6) als auswechselbare Einheit ausgebildet ist.

6. Überrollschutzsystem nach einem der vorgenannten Ansprüche, **dadurch gekennzeichnet, dass** der pyrotechnische Aktuator (6) in Wirkverbindung mit einem Berstelement steht, welches eine Halterung löst.

7. Überrollschutzsystem nach einem der vorgenannten Ansprüche, **dadurch gekennzeichnet, dass** der pyrotechnische Aktuator (6) in Wirkverbindung mit zumindest einer Klinke steht, die die Halterung löst.

8. Überrollschutzsystem nach einem der vorgenannten Ansprüche, **dadurch gekennzeichnet, dass** der pyrotechnische Aktuator (6) mit zumindest einem weiteren Druckkammerelement (11), welches fahrzeugseitig befestigt ist, in Wirkverbindung steht, in der Weise, dass das Druckkammerelement Druckgase aufnimmt.

9. Überrollschutzsystem nach einem der vorgenannten Ansprüche, **dadurch gekennzeichnet, dass** sich in einer Gebrauchslage oberhalb des pyrotechnischen Aktuators (6) ein Schottelement befindet.

10. Überrollschutzsystem nach einem der vorgenannten Ansprüche, **dadurch gekennzeichnet, dass** der Überrollkörper (2) aus zumindest einem Rohr oder aus zumindest einem Profilkörper oder aus zumindest zwei Schalenbauteilen gebildet ist.

11. Überrollschutzsystem nach einem der vorgenannten Ansprüche, **dadurch gekennzeichnet, dass** sich der Überrollkörper (2) in unmittelbarer Nähe zum Boden des Überrollschutzsystems befindet.

12. Fahrzeug mit einem Überrollschutzsystem nach einem der Ansprüche 1 bis 11, **dadurch gekennzeichnet, dass** sich der Überrollkörper (2) in unmittelbarer Nähe zu einer Wagenstruktur, die unterhalb des Überrolischutzsystems liegt, befindet.
